Europäisches Patentamt

European Patent Office

Office européen des brevets

(19)

(11) Publication number: **0 474 281 A1**

## EUROPEAN PATENT APPLICATION

(12)

(21) Application number: **91202128.4**

(22) Date of filing: **21.08.91**

(51) Int. Cl.5: **B65G 47/244**

(30) Priority: **22.08.90 NL 9001853**

(43) Date of publication of application:
**11.03.92 Bulletin 92/11**

(84) Designated Contracting States:
**BE DE DK ES FR GB GR IT NL SE**

(71) Applicant: **Speciaal-Machinefabriek J.H. van Uitert B.V.**
**Industriestraat 14-16**
**NL-5107 NC Dongen(NL)**

(72) Inventor: **van Uitert, Johannes Hendrikus**
**Vaartweg 33**
**NL-5109 RB 'S-Gravenmoer(NL)**

(74) Representative: **Lips, Hendrik Jan George, Ir.**
**HAAGSCH OCTROOIBUREAU Breitnerlaan 146**
**NL-2596 HG Den Haag(NL)**

(54) **Device for turning containers with substantially rectangular shape.**

(57) Device for turning containers (12) such as crates, etc., being supplied in succession by a conveyor (1), into the same orientation for further processing, said conveyor having an upwardly extending side rim (2) at one side of it, means being present by which arriving containers will engage said side rim with one of their side walls. A pair of gripping members (8,9) are connected to a vertical shaft (6) which by means of a motor-drive can be rotated each time over 90°. A first sensor (F1) is present for sensing the position of a container and which dependent on this will give a first signal. A second sensor (F2) being present for detecting the arrival of a container at the turning place and giving a second signal that forms a triggering signal for the motor-drive, the choice whether or not to activate said motor-drive being determined by said first signal.

FIG. 1

EP 0 474 281 A1

The invention relates to a device for turning containers with substantially rectangular shape, such as crates, cases, boxes, etc. and which are supplied in succession on a moving conveyor, into the same desired orientation for further processing, said device comprising a sensor-system which senses the position of the container supplied by the conveyor and which activates the turning-device when such a container is not in the right position.

Such a device is known from EP-A-0 179 537. In this case the turning-device substantially consists of a roller-track section with two separately driven roller systems, the rollers of the one system being positioned between the rollers of the other system, such that the rollers of both systems succeed each other. By a conical shape or an oblique positioning the rollers of the one system are extending upwardly at one side of the roller-track and the rollers of the other system at the other side of the roller-track, such that a crate or other container arriving on said roller-track is transported by these portions of said rollers. A sensor-system in front of the roller-track senses the position of a supplied crate and when this has to be turned the drive of the one system of rollers is accelerated or retarded in respect of that of the other system such that a crate present on the roller-track is turned. The right position is controlled by a further sensor which when sensing the right position gives a signal that makes that both roller systems rotate at the same speed.

This known system is particularly suitable concerning its operation but is rather expensive which is caused, among other things, by the rather complicated sensor system as well as by the fact that two drives are necessary for the roller track. Beside this, generally speaking, a speed control is necessary for the motor as e.g. in the shape of a frequency regulator or pole reversal drive.

Now the object of the invention is to provide a device for turning crates, boxes, etc. which in a simple and suitable way can turn crates and the like without needing a double, controlled drive of two motor- drives for separate roller systems.

To that end the invention provides a device as described above and which is characterized by:

a horizontal conveyor section with an upwardly extending side rim at least at one side of it and with means by which arriving containers will engage said side rim with one of their side walls,

a vertical positioned rotating shaft to which at least one pair of gripping members, being staggered over 180° in respect of each other, is connected,

a controlled motor-drive, rotating the rotating shaft each time over 90°, and

a sensor system with a first sensor sensing the position (transverse or alongside) of a container engaging the side rim of the conveyor section and which dependent on this will give a first signal, and a second sensor detecting the arrival of a container at the turning place and giving a second signal forming a triggering-signal for the motor-drive, the choice whether or not to activate said motor-drive being determined by said first signal.

The starting point of the invention is, that crates and other containers substantially are transported on pallets, onto which they are stacked both transverse and along side so that these crates, generally speaking, will arrive transverse or alongside onto the conveyor by which they have to be transported for further handling. For this further handling, unpacking and possibly storing, filling and such like it is necessary that all crates arrive in one and the same position, e.g. all transverse. Provided that the crates arrive exclusively tranverse or alongside onto the conveyor a mechanism with gripping members and rotating over 90° will suffice by which selectively crates are turned over 90° which crates are e.g. exclusively oriented alongside. To this end it is necessary that the crates are correctly positioned beforehand in view of being gripped in the right way by the gripping members. To take care of this correct positioning according to the invention the horizontal conveyor section comprises an upwardly extending side rim forming a positioning surface for engaging the arriving containers. Once thus positioned a relatively simple sensor system can take care of it that selectively only transverse or alongside positioned crates or other containers are gripped and rotated over 90°. In fact said upwardly extending side rim has a double function, namely that primary the crates or other containers are turned somewhat so that they indeed are positioned transverse or alongside and that secondarily they are arriving at the right place to be turned whether or not.

Appropriately for the sensor system use can be made of standard measuring photo-electric cells with incorporated light source. In particular the first sensor can be a measuring photo-electric cell with incorporated light source and be positioned at the side of the conveyor section opposite the upwardly extending side rim and having such a reach of the measuring light beam that a container engaging the side rim of the conveyor section alongside will not reflect the light beam to the photo-electric cell and a container engaging the side rim transverse will indeed reflect the light beam to the photo-electric cell which in the last mentioned case will emit an electric signal dependent on which it is decided whether or not the container has to be turned.

Also the second sensor, the arrival sensor, appropriately can be such a measuring photo-electric cell. When detecting the arrival of a container said second sensor gives an electric signal to the turning mechanism, triggering the drive of it such that this will carry out its action unless this is prevented by the first signal of the first sensor. In this case the embodiment can be such that the light beam is directly reflected against the side wall of an arriving container and as it is also possible to make use of a diametrically opposite positioned reflector in which case interruption of the light beam gives the indication. Principally the first and second measuring photo-electric cells might be positioned opposite each other, such that the signals coming from these are emitted simultaneously but in practice it is preferred that the second photo-electric cell is positioned somewhat downstream in respect of the first photo-electric cell as seen in the moving direction of the conveyor. By this cross talk, if any, is prevented while by the somewhat earlier emission of the first signal it is guaranteed that no unwanted effects will occur namely that the turning mechanism should be activated during a short time.

It is preferred to position a third sensor along the conveyor section for sensing the height of an arriving container and giving a locking signal when this height exceeds a given value. By this it is prevented that a container deviating from the remaining containers, e.g. a crate with higher bottles in it or a crate of another type which in fact is too high for the adjustment of the device, might cause an interruption by jamming. Suitably this first sensor also might be a measuring photo-electric cell, positioned at the one side of the conveyor section, with a mirror or reflector diametrically positioned at the other side.

Obviously there are various possibilities to take care of it, that the containers are applied against said upwardly extending side rim of the conveyor section, e.g. by means of a hydraulic, pneumatic or electric activated buffer, pressing the arriving containers sidewards against the side rim, which buffer might be provided with a sensing-system, e.g. with reed-contacts, which performs the function of the first sensor. It is preferred, however, that as a means to apply the containers against said upwardly extending rim, this rim extends obliquely outwards in respect of the transport direction at the supply side of the conveyor section. By this containers arriving there will automatically be moved slantingly towards this upwardly extending rim and will engage this with one side wall.

In view of the photo-electric sensing it is preferred that the containers supplied by the conveyor section will not engage each other, but will be at a small distance from each other. To guarantee this according to the invention it is provided further that the conveyor section has a speed which is somewhat higher than that of the supply conveyor for containers joining it. The arriving containers, crates or boxes, will be brought at some distance from each other by the sudden acceleration, so that a small mutual distance is guaranteed.

The turning as such is obtained by means of the gripping members which can be executed in various ways. The execution can be such that the gripping members are in the shape of flat plates with downwardly bended rims, said vertical rotation shaft being vertically movable to bring these rims over the side walls of a container to be turned. Obviously said vertical rotation shaft has to be moved downwardly at the beginning of the turning over 90° and to move upwardly when this turning is ended. A further possibility is that the gripping members are shaped by flat plates with rims or fingers which can be rotated downwardly over the side walls of a container. It is also possible to use gripping members which gripp a crate of other container which has to be turned from beside. In this case such a gripping member may exist of a rectangular hook gripping onto a side edge of a container.

The device according to the invention may work with a vertical rotation shaft, with connected to this one pair of gripping members being staggered 180° in respect of each other. In that case the drive will cause a second rotation over 90°, after the first rotation over 90° by which a crate or box is turned over 90°, to bring the other gripping member in the correct position for gripping the next crate or box which has to be turned. Such a rotation over 90° can be easily obtained.

It is also possible to provide four gripping members in stead of two, said gripping members being staggered over 90° in respect of each other. In that case each time only a rotation over 90° has to be made because after each rotation over 90° the next gripping member is positioned at the right place.

To drive the vertical rotation shaft there are various possibilities. Particularly appropriate use can be made of a standard brake-motor, giving each time a rotation over 90°. Instead of using a brake-motor e.g. use can be made of a motor working with a cylinder with pawl-mechanism or with a revolving cylinder with free return stroke. Further, particularly appropriate is a Maltese-cross mechanism giving a continuously input rotation and an intermittent output rotation.

Further it can be remarked that by DE-A-3 614 202 a device is known for turning objects, in particular books, comprising an upward and downward movable shaft with gripping members staggered over 90°. Opposite said shaft a pressing member is arranged which also is vertically movable. Each time a book arrives in the device it is clamped between members connected to said shaft and said pressing members and is rotated over 90° because all books arrive in the same position and all are turned over 90°. So this known device works in a totally other way than the device according to the present invention.

The invention is further described by means of an embodiment shown in the drawing. In the drawing:

Fig. 1 schematically shows a plan view of a device for turning crates according to the invention, and

Fig. 2 schematically shows a side view of this device.

In the shown embodiment the device comprises a conveyor section 1, which is having an upwardly extending side rim 2 at its one side edge the initial portion of which is having an outwardly bent portion, which is slanting in respect of the direction of movement of the conveyor. At the position of the turning member, generally indicated with 5, said conveyor section has a widened portion 4 to make the turning possible.

The turning member 5 has a vertical rotation shaft 6 extending downwardly above the one side edge of the conveyor and at its lower end being provided with a flange 7 to which two gripping members 8 and 9 are connected being staggered over 180° in respect of each other. Each gripping member 8, 9 consists of a plate 10 with bent rims 11. The size of this plate is adapted to the crates which have to be turned by means of such a gripping member. The vertical rotation shaft is driven by a brake-motor (not shown) controlled by signals delivered by a first photo-electric cell F1 and a second photo-electric cell F2. The photo-electric cell F1 serves to sense the position of an arriving crate 12, the second photo-electric cell F2 signalizing the arrival of such a crate near the turning member and triggering the drive-motor in reaction to this. If, however, the photo-elctric cell F1 determines that a crate does not have to be turned, no drive of the motor takes place.

A third photo-electric cell F3 controls the height of arriving crates. This photo-electric cell cooperates with a mirror S positioned opposite of it and if the light beam between photo-electric cell and mirror is interrupted by a crate which is too high the device is stopped.

Now the working of the device will be described in more detail.

In the shown embodiment the device for turning crates is intended to turn arriving crates 12, being oriented alongside, over 90° such that they will leave the turning device oriented transversely (13). Contrary to this crates which are oriented already transversely and which also may arrive via the conveyor do not have to be turned because they are already in the correct position. The fact that crates may arrive on the conveyor both in alongside as in transverse position is a consequence of the fact that the crates are mainly supplied when stacked on pallets on which they are stacked both in transverse and in alongside position so that they can arrive on the supply conveyor (not shown) both in transverse and in alongside position.

In view of the fact that the bent rim portion 3 is obliquely positioned to the direction of movement of an arriving crate 12 the latter will be pressed against the upwardly extending side rim 2 and, thus oriented, will move further to the left in which case it will first pass the photo-electric cell F3.

If the crate is not detected by this photo-electric cell it will move further and subsequently will pass the first photo-electric cell F1 in which a light source is incorporated, the measuring light beam of which is focussed at a given reach such that a crate positioned alongside is just not detected. If, however, the crate should be positioned in transverse direction the one cross-wall of the crate will reflect the light beam such that the photo-electric cell F1 wil emit a signal.

Subsequently the crate will pass the second measuring photo-electric cell F2, which by reflection of its light against the arriving side wall of the crate will detect this arrival and will give a trigger-signal to the brake- motor (not shown). Then the second photo-electric cell will give an electric trigger-signal taking care of it that the brake-motor (not shown) is activated if no signal is received from the photo-electric cell F1. If a signal should be received activation of the motor is prevented.

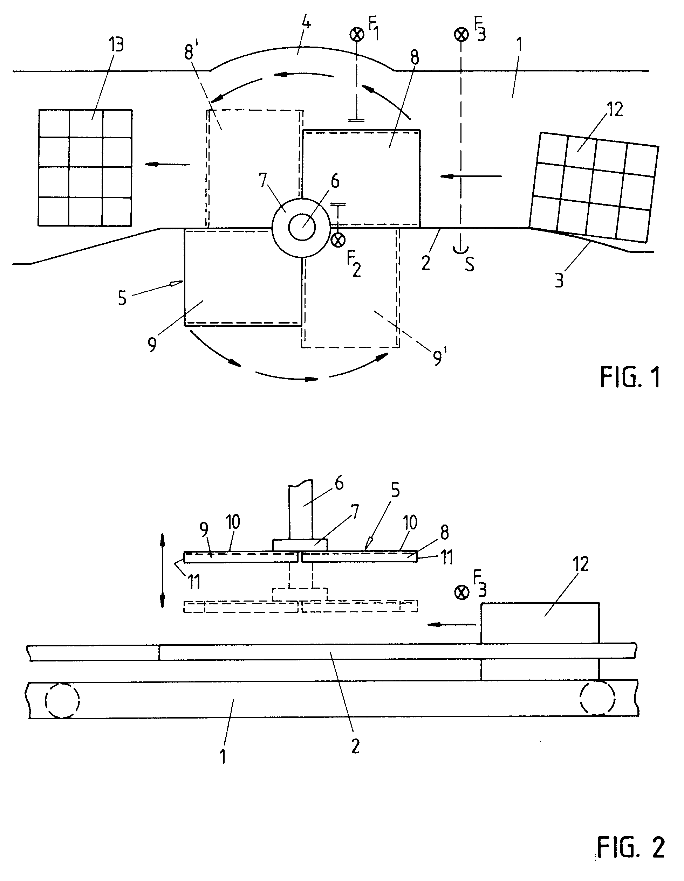

When activating the brake-motor simultaneously there is seen to it that the vertical shaft 6 is brought downwardly (fig. 2) so that the gripping member 8, with its bent rims 11, may grip the crate 12, positioned there, from above. Subsequently the brake-motor provides for a rotation of the rotation shaft 6 over 90° by which the crate 12 is turned over 90° (in the direction of the curved arrows). After this the vertical shaft is raised, the brake-motor again being rotated over 90° so that the gripping member 9 is now in the right position for gripping a next crate. In the mean time the crate which is turned over 90° and so is in transverse position will move further to the left where it can be either removed or further handled.

When instead of a crate positioned alongside a crate will arrive on the conveyor section being tranversely positioned and with one of its short sides engaging the positioning rim 2, the photo-electric cell F1 will detect this position because the measuring light beam will be reflected by the one short side wall of the crate, because of which an electric signal will be transmitted taking care for it that the motor remains switched-off. In practice it is suitable to process the signals of the first and second photo-electric cells electronically in a suitable processing device, e.g. a microprocessor or PLC (programmable logic controller) which then controls the motor.

If a wrong crate, being too high or being loaded too high, arrives the third photo-electric cell F3 is forming a safety member for the device. The photo-electric cell F3 and the mirror S, laying in line with it, are positioned at such a height that crates with the right height may pass unhindered and that a crate which is too high will interrupt the light beam between photo-electric cell and mirror, because of which the photo-electric cell will give a locking signal by which the total device is stopped so that the wrong crate can be removed.

It will be obvious that the invention is not limited to the embodiment described above and that various other possibilities, modifications and variations are possible all within the scope of the invention. So the device e. g. can be designed for turning crates which are positioned transverse to an alongside position in stead of turning crates positioned alongside to a transverse position in which case switching-off of the drive motor by means of the photo-electric cell is not done when receiving a signal but just when a signal is lacking.

Further it is possible to provide the gripping members 9, 10 with pivotable rims of fingers instead of fixed bent rims 11 so that by a suitable embodiment upward en downward movement of the vertical axis can be omitted. Other types of gripping members are also possible e.g. rectangular hooks and such like which do not grip a crate from above but from the side.

In stead of working with an oblique rim portion 3 for positioning the arriving crates against the upwardly extending side rim 2, also use can be made of a suitable pushing member (not shown) positioned at the other side and pressing the arriving crates against the rim 2. Beside this such a pushing member can be provided with measuring contacts by which is detected simultaneously whether the crate is positioned transverse or alongside and dependent on this will give a signal in which case the first photo-electric cell F1 can be omitted, said pushing member taking over the function of said first sensor.

Finally it is also possible to execute the turning device in such a way that of crates or other containers successively arriving in the same position only some are turned, by which e.g. a stacking pattern for pallets is obtained. In that case the signal for turning is coming from the outside. After what is said above further possibilities and modifications will be obvious.

## Claims

1. Device for turning containers (12) with substantially rectangular shape, such as crates, cases, boxes, etc. and which are supplied in succession on a moving conveyor (1), into the same desired orientation for further processing, said device comprising a sensor-system which senses the position of the container supplied by the conveyor and which activates the turning-device when such a container is not in the right position, **characterized by**
a horizontal conveyor section (1) with an upwardly extending side rim (2) at least at one side of it and with means by which arriving containers will engage said side rim (2) with one of their side walls,
a vertical positioned rotating shaft (6) to which at least one pair of gripping members (8,9), being staggered over 180° in respect of each other, is connected,
a controlled motor-drive, rotating the rotating shaft each time over 90°, and
a sensor system with a first sensor (F1) sensing the position (transverse or alongside) of a container (12) engaging the side rim (2)of the conveyor section and which dependent on this will give a first signal, and a second sensor (F2) for detecting the arrival of a container at the turning place and giving a second signal forming a triggering-signal for the motor-drive, the choice whether or not to activate said motor-drive being determined by said first signal.

2. Device according to claim 1, **characterized in that** said first sensor (F1) is a photo-electric cell with incorporated light source and positioned at the side of the conveyor section (1) opposite the upwardly extending side rim (2) and having such a reach of the measuring light beam that a container (12) engaging the side rim of the conveyor section alongside will not reflect the light beam to the photo-electric cell and a container engaging the side rim transversely will indeed reflect the light beam to the photo-electric cell.

3. Device according to claim 1 or 2, **characterized in that** said second sensor (F2) is a measuring photo-electric cell.

4. Device according to claim 3, **characterized in that** the second measuring photo-electric cell (F2) is positioned somewhat downstream in respect of said first measuring photo-electric cell (F1), as seen in the transport direction of the conveyor (1).

**5.** Device according to one of the preceding claims, **characterized in that** a third sensor (F3), positioned along the conveyor section (1), senses the height of an arriving container (12) and will give a locking signal when this height exceeds a given value.

**6.** Device according to claim 5, **characterized in that** said third sensor (F3) is a measuring photo-electric cell, positioned at the one side of the conveyor section (1) with a mirror diametrically positioned at the other side.

**7.** Device according to one of the preceding claims, **characterized in that** as a means to apply the containers (12) against the one upwardly extending rim (2) this rim extends obliquely outwardly in respect of the transport direction at the supply side of the conveyor section.

**8.** Device according to one of the preceding claims, **characterized in that** the conveyor section (1) is having a speed which is somewhat higher than that of the supply conveyor for containers joining it.

**9.** Device according to one of the preceding claims, **characterized in that** the gripping members (8,9) are in the shape of flat plates with downwardly bent rims, said vertical rotation shaft (6) being vertically movable to bring these rims over the side walls of a container.

**10.** Device according to one of the claims 1-8, **characterized in that** the gripping members (8,9) are shaped

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-8 807 016 (NOSHE ENGINEERING LTD) <br> * the whole document * | 1,2,7 | B65G47/244 |
| Y | EP-A-0 125 089 (THE MEAD CORPORATION) <br> * figures * | 1,2,7 | |
| A | DE-A-3 614 202 (LEIFELD UND LEMKE MASCHINENFABRIK) <br> * the whole document * | 1,9,12 | |
| A | FR-A-2 304 893 (N.V. PHILIPS' GLOEILAMPENFABRIEKEN) <br> * page 4, line 5 - page 5, line 11; figures 1,2 * | 1,2,9 | |
| A | DE-A-2 810 834 (REINHARD MOHN GMBH) <br><br> * figures * | 1,9,10, 11,12 | |
| | ----- | | TECHNICAL FIELDS SEARCHED (Int. Cl.5) |
| | | | B65G |

The present search report has been drawn up for all claims

| Place of search | Date of completion of the search | Examiner |
|---|---|---|
| THE HAGUE | 25 NOVEMBER 1991 | OSTYN T.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)